# EUROPÄISCHE PATENTSCHRIFT

(11) **EP 1 502 696 B1**
(45) Veröffentlichungstag und Bekanntmachung des Hinweises auf die Patenterteilung: **06.12.2006**
(21) Anmeldenummer: 04016686.0
(22) Anmeldetag: 15.07.2004
(51) Int. Cl.: B23Q 3/155

(54) **Werkzeug-Regalmagazin für Fräs- und Bohrmaschinen**
Tool storage device for drilling and milling machines
Magasin à outils pour machines de fraisage et perçage

(30) Priorität: 28.07.2003 DE 10334346
(43) Veröffentlichungstag der Anmeldung: 02.02.2005
(73) Patentinhaber: DECKEL MAHO Pfronten GmbH, 87459 Pfronten (DE)
(72) Erfinder: Geissler, Alfred, 87459 Pfronten (DE); Gronbach, Hans, Dr., 87637 Eisenberg (DE)
(74) Vertreter: Beetz & Partner

(56) Entgegenhaltungen:
- US-A- 5 093 978
- US-A- 5 281 194
- US-B1- 6 464 623

## Beschreibung

Die Erfindung betrifft ein Werkzeug-Regalmagazin der im Oberbegriff des Patentanspruches 1 angegebenen Gattung.

Werkzeug-Regalmagazine sind in verschiedenen Ausführungen bekannt und werden vorzugsweise an komplexen Werkzeugmaschinen, wie Bearbeitungszentren, Erodieranlagen, usw., eingesetzt, die eine Vielzahl von verschiedenen Bearbeitungsvorgängen mit jeweils unterschiedlichen Werkzeugen ausführen können. Herkömmliche Regalmagazine weisen ein seitlich neben der Werkzeugmaschine positioniertes Regal mit mehreren in vorgegebenen Zwischenabständen übereinander angeordneten Fächern auf. In jedem Fach sind eine Vielzahl von etwa halbrunden, zur Maschinenseite hin offenen Ausschnitten ausgebildet, in welche die verschiedenen Werkzeuge mit ihren Werkzeugkegeln eingelegt werden. Seitlich an oder neben dem Regal ist ein Handhabungssystem vorgesehen, das eine an Horizontalschienen verfahrbare Tragsäule und eine an der Tragsäule vertikal verfahrbare Greiferanordnung mit einem bewegbaren Werkzeuggreifer zur Entnahme eines vorbestimmten Werkzeuges aus dem Magazin und zum Transport dieses Werkzeuges in eine Übergabeposition aufweist, in welcher dieses Werkzeug entweder nach dem Pick-up-Prinzip direkt in die Arbeitsspindel eingewechselt oder an einen Werkzeugwechsler übergeben wird. Derartige Regalmagazine mit Handhabungssystem sind z.B. aus den EP 0 319 914 B und DE 100 20 801 A bekannt.

Aus der DE 39 25 567 A ist die Verwendung von mehreren Magazinregalen bekannt, die an einer Seite neben der Werkzeugmaschine angeordnet sind und jeweils zwei Fächer mit einer Reihe von Werkzeugaufnahmen aufweisen. Die Magazinregale sind auf seitlichen Tragschienen einzeln aus einer rückwärtigen Stand-by-Stellung in eine vordere Stellung verfahrbar, in welcher die einzelnen Werkzeuge von einer an einem formsteifen Tragrahmen verfahrbaren Greiferanordnung erfaßt und in eine Vertikalspindel oder eine Horizontalspindel des Bearbeitungszentrums eingesetzt werden können. Dieses Werkzeugspeicher- und -handhabungssystem ist extrem aufwendig und beansprucht einen großen Platz neben der Werkzeugmaschine.

Ferner ist aus der US 5 281 194 (DE 41 16 091 C) ein gattungsgemäßes Werkzeugmagazin bekannt, das mehrere auf einem Kreis arrangierte Regalsegmente mit jeweils übereinander angeordneten Aufnahmefächern für Werkzeuge aufweist. Ausgewählte Regalsegmente sind um ihre vertikale Mittelachse verdrehbar und weisen an ihren beiden Längsseiten Fächer auf, in denen Aufnahmen für Werkzeuge ausgebildet sind. Im Zentrum der kreisförmig positionierten Regalsegmente befindet sich eine Handhabungseinrichtung, die eine um eine vertikale Achse verdrehbare Säule mit einem daran axial verfahrbaren Schlitten aufweist. Dieser Schlitten trägt horizontale Teleskoparme mit einer Greiferanordnung zum Erfassen und zur Übergabe eines Werkzeugs.

Aufgabe der Erfindung ist es, ein Werkzeug-Regalmagazin mit einer Handhabungseinrichtung zu schaffen, das eine gegenüber bekannten Regalmagazinen erhöhte Speicherkapazität hat und eine wesentlich verbesserte Bestückung und Handhabung der Werkzeuge ermöglicht.

Diese Aufgabe wird erfindungsgemäß durch die im Patentanspruch 1 angegebenen Merkmale gelöst.

Ein wesentlicher Vorteil besteht in der Verdoppelung der Speicherkapazität gegenüber herkömmlichen Werkzeugregalen von gleichen Abmessungen. Wesentlich ist ferner die Möglichkeit, die außenseitigen Werkzeuge im Regal wechseln zu können, ohne daß dadurch der Betrieb der Werkzeugmaschine und auch des Handhabungssystems unterbrochen werden müßte. Lediglich für den kurzzeitigen Seitenwechsel ist es notwendig, die Handhabungseinrichtung in eine Position zu bringen, in welcher der Seitenwechsel des Magazins bzw. der Magazinfächer ungestört ablaufen kann.

Eine besonders zweckmäßige Weiterbildung der Erfindung zeichnet sich dadurch aus, daß das für einen Seitenwechsel ausgebildete Werkzeugregal ein Segment eines ortsfesten Wandregals ist. In diesem Fall sollte das beidseitig mit Werkzeugen besetzbare Regalsegment in einer Vertikalachse um mindestens 180° verdrehbar sein, so daß der Seitenwechsel durch eine Verdrehung dieses Regals erfolgt und dadurch die bis dahin im Zugriffsbereich der Handhabungseinrichtung befindlichen Werkzeuge zur Außenseite sowie die neu eingesetzten bisher außenseitigen Werkzeuge in den Zugriffsbereich der Handhabungseinrichtung bewegt werden. Diese Kombination aus einem beidseitig besetzbaren Werkzeugregal und mindestens einem ortsfesten Wandregal eröffnet erstmals die Möglichkeit eines ununterbrochenen Langzeitbetriebs der jeweiligen Werkzeugmaschine. Die Handhabungseinrichtung erhält eine Doppelfunktion, indem sie in herkömmlicher Weise Werkzeuge aus dem Werkzeugwechsler bzw. direkt aus der Arbeitsspindel aufnimmt und diese in ihre vorbestimmten Werkzeughalter im Wandmagazin ablegt. Daneben werden auch gebrauchte, d.h. beispielsweise teilverschlissene, Werkzeuge aus ihren vorbestimmten Haltern im Wandmagazin von der Handhabungseinrichtung entnommen und in Leerplätze des beidseitig besetzbaren Werkzeugmagazins eingesetzt. Diese Operationen werden von der Handhabungseinrichtung zweckmäßig während längerer Bearbeitungszeiten ohne Werkzeugwechsel durchgeführt. In einer weiteren Operation kann die Handhabungseinrichtung dem beidseitig besetzbaren Magazin neue Werkzeuge entnehmen und diese in entsprechende Halter des Wandmagazins einsetzen, so daß diese Werkzeuge für einen der nächstfolgenden Bearbeitungsvorgänge im Wandmagazin zur Verfügung stehen. Wenn das beidseitig besetzbare Werkzeugmagazin mit einer ausreichenden Anzahl an gebrauchten Werkzeugen besetzt ist, erfolgt ein Seitenwechsel, so daß die zuvor außenseitigen neuen Werkzeuge sich nunmehr an der Innenseite im Zugriffsbereich der Handhabungseinrichtung befinden. Die dann außenseitigen gebrauchten Werkzeuge sind nunmehr frei zugänglich und können gefahrlos und ohne Beeinträchtigung der maschinenseitigen Vorgänge aus ihren Aufnahmen herausgenommen und durch neue Werkzeuge ersetzt werden.

Das Regalmagazin nach der Erfindung, das eine wesentlich erhöhte Speicherkapazität besitzt und bei dem die Werkzeugwechselvorgänge in der vorstehend beschriebenen Weise ablaufen, zeichnet sich dadurch aus, daß zwei Regale nebeneinander in einem vorgegebenen Abstand seitlich neben der Werkzeugmaschine vorgesehen sind, wobei das außenseitige Regal mindestens ein um seine vertikale Mittelachse verdrehbares Regalsegment aufweist. Im Zwischenraum der beiden Regale ist die Handhabungseinrichtung angeordnet und das maschinenseitige Regal weist der Handhabungseinrichtung zugekehrte Ausschnitte als Werkzeughalter sowie eine Durchgriffsöffnung zur Übergabe der Werkzeuge zwischen der Handhabungseinrichtung und einem Werkzeugwechsler auf. Da bei einem derartigen Regalmagazin das außenseitige Regal mit dem um die vertikale Mittelachse verdrehbaren Regalsegment und auch das maschinenseitige Regal von der einzigen mittig angeordneten Handhabungseinrichtung bedient werden, ist bei dieser Ausbildung der mindestens eine Greifer verdrehbar am Ende eines Schwenkarms angelenkt. Die Handhabungseinrichtung verfügt über einen kinematischen Dreh-Ausgleich, der eine Verdrehung des jeweiligen Werkzeugs während eines Übergabevorgangs kompensiert, so daß jedes Werkzeug seine Winkelstellung in seinem Magazinplatz vom Entnahmevorgang durch den Greifer bis zur Übergabe an den Werkzeugwechsler beibehält. Durch diese Verdreh-Kompensation werden Fehler und Störungen bei den Übergabevorgängen und auch beim Einsetzen in die jeweilige Arbeitsspindel der Maschine vermieden. Ferner ermöglicht der kinematische Dreh-Ausgleich eine schmale Fahrgasse der Handhabungseinrichtung, d.h. einen geringen Zwischenabstand der Regale, weil die Werkzeuge ohne Eigendrehung transportiert und übergeben werden.

Gegenstand der Erfindung ist noch ein Verfahren zur Handhabung von Werkzeugen unter Verwendung eines erfindungsgemäßen Regalmagazins und einer Handhabungseinrichtung, bei welchem die entsprechend dem Bearbeitungsprogramm der Werkzeugmaschine benötigten Werkzeuge von der Handhabungseinrichtung aus den jeweiligen Werkzeughaltern des Regalmagazins entnommen und nach Verfahren der Handhabungseinrichtung in eine Übergabeposition an einen Werkzeugwechsler übergeben werden - und umgekehrt - wobei erfindungsgemäß an zumindest einem Regalsegment während des Betriebes der Werkzeugmaschine die von außen zugänglichen gebrauchten Werkzeuge aus den Werkzeughaltern herausgenommen und neue Werkzeuge in diese Werkzeughalter eingesetzt werden, wobei danach die neu eingesetzten Werkzeuge durch Bewegen des Regalsegments in den Zugriffsbereich der Handhabungseinrichtung gebracht werden und wobei die Handhabungseinrichtung während des Maschinenbetriebes gebrauchte Werkzeuge dem restlichen Regal entnimmt und sie in Leerplätze des Regalsegments einsetzt sowie diesem Regalsegment die neuen Werkzeuge entnimmt und diese Werkzeuge in Leerplätze des restlichen Regals einsetzt.

Im folgenden werden bevorzugte Ausführungsbeispiele der Erfindung anhand der Zeichnung im einzelnen beschrieben. Es zeigen:
- Fig. 1: ein Regalmagazin mit Wandregalen und einem verdrehbaren Regalsegment sowie einer mittleren Handhabungseinrichtung in schematischer Draufsicht;
- Fig. 2: ein Regalmagazin mit mehreren nebeneinander angeordneten jeweils um eine Hochachse verdrehbaren Regalsegmenten und einer Handhabungseinrichtung in schematischer Draufsicht;

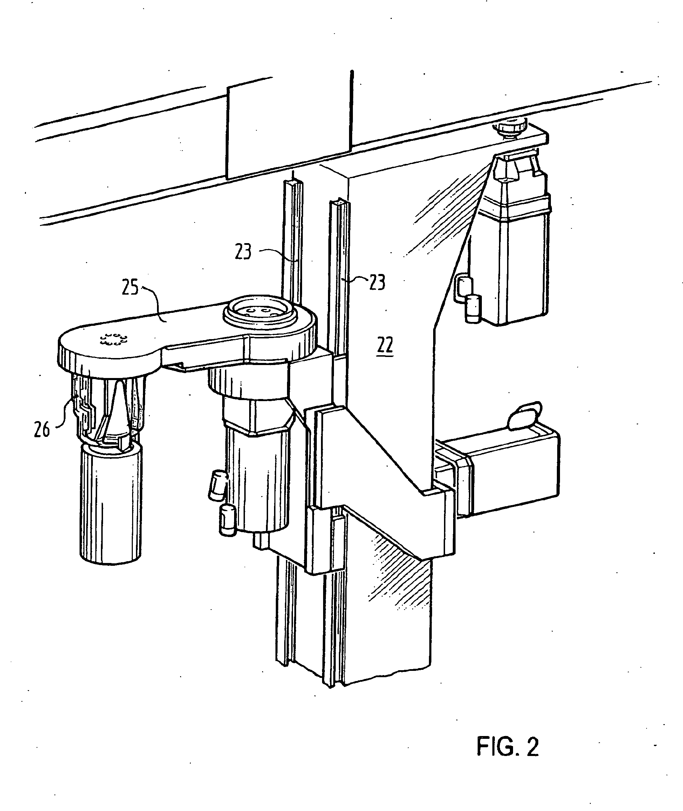

- Fig. 2: die Handhabungseinrichtung in vergrößerter perspektivischer Darstellung.

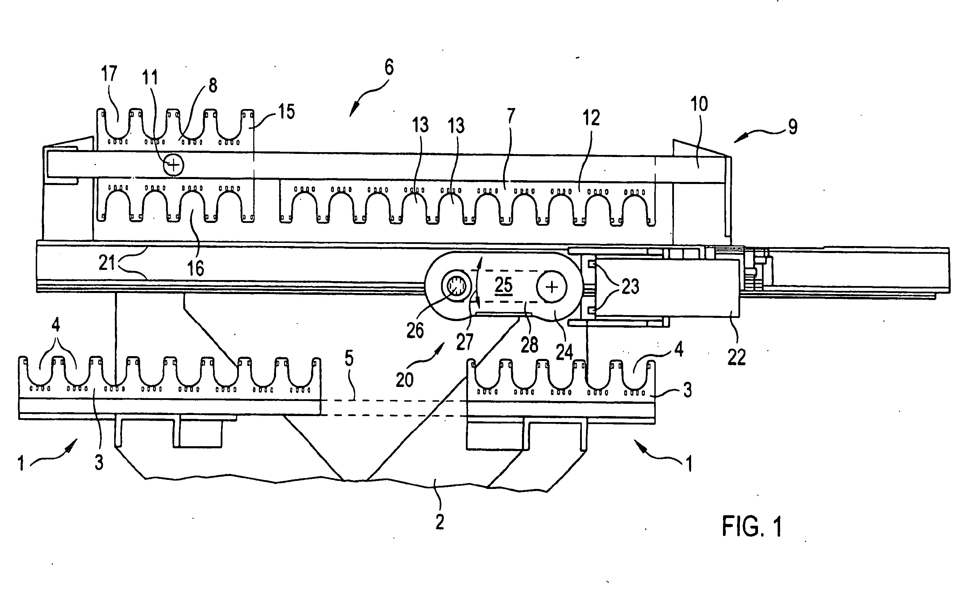

Das in Fig. 1 dargestellte Werkzeug-Regalmagazin ist für eine programmgesteuerte Fräs- und Bohrmaschine konzipiert, die über einen Werkzeugwechsler verfügt, mit welchem die Werkzeuge entsprechend dem jeweiligen Bearbeitungsprogramm in die Arbeitsspindel eines horizontalen oder vertikalen Fräskopfes ein- und ausgewechselt werden. Das Regalmagazin besteht aus einem maschinenseitigen ortsfesten Regal 1, das auf einem Unterbau 2 fest montiert ist und eine Vielzahl von in vorbestimmten Abständen übereinander angeordneten Fächern 3 aufweist, von denen in Draufsicht nur eines sichtbar ist. In jedem Fach 3 ist eine Vielzahl von - in Fig. 1 nach oben - offenen etwa halbrunden Ausschnitten 4 als Halter für die Werkzeugkegel der jeweiligen Werkzeuge ausgebildet. In seinem mittleren Bereich weist dieses ortsfeste Regal eine Durchgriffsöffnung 5 für die Werkzeugübergabe auf.

Das dargestellte Werkzeug-Regalmagazin enthält ein rückwärtiges Regal 6, das ein ortsfestes Wandregal 7 sowie in dessen Fortsetzung ein Regalsegment 8 aufweist. Das Wandregal 7 und das Regalsegment 8 sind in einer Rahmenkonstruktion 9 angeordnet, deren oberer Längsholm 10 sich über die gesamte Länge des Regals 6 erstreckt. Das Regalsegment 8 ist in der Rahmenkonstruktion in Drehlagern 11 um seine vertikale Mittelachse verdrehbar. Das Wandregal 7 enthält eine Vielzahl von in vorbestimmten Abständen übereinander angeordneten Fächern 12, von denen nur eines in Draufsicht dargestellt ist. Jedes Fach 12 des Wandmagazins 7 weist eine Reihe von - in Fig. 1 nach unten - offenen etwa halbrunden Ausschnitten 13 als Halter für die Werkzeugkegel von Werkzeugen auf, die hinsichtlich Anordnung und Funktion den Ausschnitten 4 des Regals 1 entsprechen.

Das Regalsegment 8 hat ebenfalls in vorgegebenen vertikalen Abständen übereinander angeordnete Fächer 15, die jedoch an beiden Längsseiten je eine Reihe von Ausschnitten 16, 17 aufweisen, wobei die - in Fig. 1 nach unten - offenen Ausschnitte 16 hinsichtlich Lage und Ausrichtung den Ausschnitten 13 im ortsfesten Wandregal 7 entsprechen. Die in jedem Fach 15 des Regalsegments 8 - in Fig. 1 nach oben - offenen Ausschnitte 17 sind frei zugänglich, so daß zu einem beliebigen Zeitpunkt gebrauchte Werkzeuge herausgenommen und neue Werkzeuge eingesetzt werden können. Bei dem dargestellten Ausführungsbeispiel ist das Regalsegment 8 symmetrisch, so daß durch eine Verdrehung um 180° um seine vertikale Hochachse 11 ein Seitenwechsel der Fächer erfolgt, d.h. die in Fig. 1 nach unten offenen Ausschnitte 16 gelangen nach oben und die in Fig. 1 nach oben offenen Ausschnitte 17 gelangen nach unten.

Im Zwischenraum zwischen den beiden Regalen 1 und 6 befindet sich eine auf Bodenschienen 21 verfahrbare Handhabungseinrichtung 20, die in Fig. 2 im einzelnen dargestellt ist. Auf den Bodenschienen 21 ist ein formsteifer Vertikalständer 22 motorisch horizontal verfahrbar, an dessen Stirnseite über vertikalen Führungsschienen 23 eine Greiferanordnung 24 motorisch verfahrbar ist. Diese Greiferanordnung 24 enthält einen Schwenkarm 25, an dessen freiem Ende ein Greifer 26 angeordnet ist. Der Schwenkarm 25 kann Schwenkbewegungen in Richtung des Doppelpfeils 27 ausführen, so daß sein Greifer 26 Werkzeuge aus den Ausschnitten 4 des maschinenseitigen Regals 1 ebenso wie aus den Ausschnitten 13, 16 des Werkzeugregals 6 herausnehmen und einsetzen kann. Durch eine besondere Kinematik der Greiferanordnung (24), die beispielsweise als Endlos-Zahnriemen 28 ausgebildet sein kann, bleibt die Winkelstellung des jeweiligen Werkzeuges auch nach dem Zugriff des Greifers 26 und der Übergabe durch die Öffnung 5 hindurch erhalten, d.h. während der verschiedenen Bewegungen des Greifers 26 erfolgt keine Verdrehung des jeweils ergriffenen Werkzeugs.

Der Betrieb des vorstehend beschriebenen Regalmagazins gestaltet sich wie folgt. Ein in Fig. 1 nicht dargestellter Werkzeugwechsler der Maschine bringt ein der Arbeitsspindel entnommenes gebrauchtes Werkzeug in eine Übergabeposition vor der Durchgriffsöffnung 5. Durch eine kombinierte horizontale und vertikale gesteuerte Fahrbewegung der Handhabungseinrichtung 20 gelangt die Greiferanordnung 24 in eine bestimmte Position, in welcher durch eine Schwenkbewegung des Schwenkarms 25 der Greifer 26 in die Übergabeposition gebracht wird und das gebrauchte Werkzeug dem Werkzeugwechsler entnimmt. Durch Rückschwenken des Schwenkarms 25 in die dargestellte Mittellage kann die Handhabungseinrichtung 20 nach Vorgabe des Programms in eine Position verfahren, in welcher durch eine Schwenkbewegung des Schwenkarms 25 das gebrauchte Werkzeug in einen vorbestimmten Leerplatz in einem der Magazine 1 oder 6 abgelegt wird, und zwar in der gleichen Winkelstellung. Durch Vorsehen des um seine Hochachse 11 verdrehbaren Regalsegments 8 erhält die Handhabungseinrichtung 20 noch eine zusätzliche Funktion, indem Werkzeuge zwischen dem Regalsegment 8 und den ortsfesten Wandregalen 1, 6 ausgetauscht werden können, und zwar während der spanenden Bearbeitung der Maschine, was einen ununterbrochenen Maschinenbetrieb ermöglicht. Beispielsweise können verschlissene Werkzeuge einem der Fächer 3, 12 von der Handhabungseinrichtung 20 entnommen und in einen leeren Ausschnitt 16 eines der Fächer 15 abgelegt werden. Wenn eine ausreichende Anzahl an verschlissenen Werkzeugen in den Ausschnitten 16 der Fächer 15 des Wandregals 8 abgelegt sind und gleichzeitig die außenseitigen Ausschnitte 17 dieser Fächer 15 mit neuen ausgewählten Werkzeugen besetzt sind, wird durch eine Drehbewegung des Wandregals 8 um die Hochachse 11 ein Seitenwechsel durchgeführt, so daß sich danach die neuen Werkzeuge im Zugriffsbereich der Handhabungseinrichtung 20 befinden und die dann außenseitigen verschlissenen Werkzeuge zu einem beliebigen Zeitpunkt aus den Ausschnitten herausgenommen werden können. Die Handhabungseinrichtung 20 entnimmt den dann innenseitigen Fächern die jeweiligen Werkzeuge und ordnet sie in vorbestimmte Ausschnitte der Fächer 3, 12 der ortsfesten Magazine ein, so daß sie dann bei Bedarf in der vorstehend beschriebenen Weise von der Handhabungseinrichtung 20 an den Werkzeugwechsler übergeben werden können. Aufgrund der quasi kontinuierlichen Möglichkeit des Werkzeugaustausches kann die jeweilige Werkzeugmaschine im Langzeitbetrieb mit einer beliebigen Anzahl unterschiedlicher Werkzeuge ohne Unterbrechung betrieben werden.

Die Erfindung ist nicht auf das vorstehend beschriebene und in der Zeichnung dargestellte Ausführungsbeispiel beschränkt. So ist es beispielsweise möglich, statt der beiden dargestellten Wandregale 1 und 7 nur ein einziges Wandregal zusammen mit dem um seine Hochachse verdrehbaren Regalsegment 8 zu verwenden. Ferner können auch mehrere jeweils um ihre Hochachse verdrehbare Regalsegmente nebeneinander in der Rahmenkonstruktion 9 angeordnet werden, und zwar in Kombination mit einem ortsfesten Wandregal oder auch ohne ein derartiges Wandregal.

## Patentansprüche

1. Werkzeug-Regalmagazin für Fräs- und Bohrmaschinen mit
- mindestens einem Regal (1, 6) mit mehreren in vorgegebenen Abständen übereinander angeordneten Fächern (3, 12), die jeweils eine Vielzahl von einseitig offenen Ausschnitten (4, 13) als Halter für je ein hängendes Werkzeug aufweisen,
- einer neben dem Regal (1, 6) angeordneten vertikal und horizontal motorisch verfahrbaren Handhabungseinrichtung (20) mit mindestens einer Greiferanordnung (24) zum Herausnehmen vorbestimmter Werkzeuge aus dem jeweiligen Regal (1, 6) und zur Übergabe dieses Werkzeugs an einen Werkzeugwechsler, und
- mindestens einem um seine vertikale Mittelachse (11) verdrehbaren Regalsegment (8), das Fächer (15) mit vorderseitigen und rückseitigen Ausschnitten (16, 17) als Werkzeughalter aufweist, wobei sich die vorderseitigen Ausschnitte (16) im Zugriffsbereich der Handhabungseinrichtung (20) befinden und die rückseitigen Ausschnitte (17) zur Werkzeugbestückung zugänglich sind,
**dadurch gekennzeichnet, daß**
- zwei Regale (1, 6) nebeneinander in einem vorgegebenen Abstand seitlich neben der Werkzeugmaschine vorgesehen sind,
- das außenseitige Regal (6) das um seine vertikale Mittelachse (11) verdrehbare Regalsegment (8) aufweist,
- die Handhabungseinrichtung (20) im Zwischenraum zwischen den beiden Regalen (1 und 6) angeordnet und zur Bedienung beider Regale (1, 6) ausgebildet ist, und
- das maschinenseitige Regal (1) eine Durchgriffsöffnung (5) zur Übergabe der Werkzeuge von der Handhabungseinrichtung (20) an den Werkzeugwechsler - und umgekehrt - aufweist.

2. Regalmagazin nach Anspruch 1,
**dadurch gekennzeichnet, daß**
das um seine vertikale Mittelachse (11) verdrehbare Regalsegment (8) Teil eines ortsfesten Wandregals (6) ist.

3. Regalmagazin nach Anspruch 1 oder 2,
**dadurch gekennzeichnet, daß**
die Handhabungseinrichtung (20) über einen kinematischen Drehausgleich (27) verfügt, der eine Verdrehung des jeweiligen Werkzeugs während eines Übergabevorgangs kompensiert.

4. Regalmagazin nach einem der vorstehenden Ansprüche,
**dadurch gekennzeichnet, daß**
die Greiferanordnung (24) verdrehbar am Ende eines Schwenkarms (25) angelenkt ist und der Greifer (26) für einen beidseitigen Zugriff eines Werkzeugs ausgebildet ist.

5. Verfahren zur Handhabung von Werkzeugen unter Verwendung eines Regalmagazins und einer Handhabungseinrichtung nach einem der Ansprüche 1 bis 4, bei welchem
- die entsprechend dem Bearbeitungsprogramm der Werkzeugmaschine benötigten Werkzeuge von der Handhabungseinrichtung aus den jeweiligen Werkzeughaltern des Regalmagazins entnommen und nach Verfahren der Handhabungseinrichtung in einer Übergabeposition an einen Werkzeugwechsler übergeben werden - und umgekehrt -,
**dadurch gekennzeichnet, daß**
- an zumindest einem Regalsegment (8) während des Betriebes der Werkzeugmaschine die gebrauchten Werkzeuge aus von außen zugänglichen Werkzeughaltern (17) herausgenommen und neue Werkzeuge in diese Werkzeughalter (17) eingesetzt werden,
- danach die neu eingesetzten Werkzeuge durch Bewegen des Regalsegments (8) in den Zugriffsbereich der Handhabungseinrichtung (20) gebracht werden, und
- die Handhabungseinrichtung (20) während des Maschinenbetriebes gebrauchte Werkzeuge dem restlichen Regal (1, 7) entnimmt und sie in Leerplätze des Regalsegments (8) einsetzt, sowie dem Regalsegment (8) die neuen Werkzeuge entnimmt und diese in Leerplätze des restlichen Regals (1, 7) einsetzt.

## Claims

1. Tool shelf magazine for milling and drilling machines comprising
- at least one shelf (1, 6), a plurality of compartments (3, 12) provided in the shelf above each other in predetermined intervals and comprising a plurality of notches (4, 13), respectively, which are open on one side and serve as accommodations for one suspended tool, respectively,
- a handling device (20) vertically and horizontally shiftable by means of a motor, located adjacent to the shelf (1, 6) and comprising at least one gripper arrangement (26) for extracting predetermined tools from the respective shelf (1, 6) and for transferring said tool to a tool exchanger, and
- at least one shelf segment (8) rotatable about its centre axis (11) and comprising compartments (15) with notches (16, 17) serving as tool accommodations on the front and rear side, the notches (16) on the front side being located in the access range of the handling device (20) and the notches (17) on the back side being accessible for tooling, and
**characterised in that**
- two shelves (1, 6) are provided adjacent to each other in a predetermined distance and adjacent to the machine tool,
- the shelf (6) on the outer side comprises the shelf segment (8) rotatable about its centre axis (11),
- the handling device (20) is provided in the space between the two shelves (1 and 6) and designed to handle both shelves (1, 6), and
- the shelf (1) on the machine side comprises a through hole (5) for transferring the tools from the handling device (20) to the tool exchanger - and vice versa.

2. Shelf magazine according to claim 1,
**characterised in that**
the shelf segment (8) rotatable about its centre axis (11) is part of a stationary wall shelf (6).

3. Shelf magazine according to claim 1 or 2,
**characterised in that**
the handling device (20) is provided with a kinematic rotation compensating means (27) for compensating a rotation of the respective tool during a transfer operation.

4. Shelf magazine according to one of the preceding claims,
**characterised in that**
the gripper arrangement (24) is rotatably hinged to the end of a swivel arm (25) and the gripper (26) is designed to grip a tool from both sides.

5. Method for handling tools using a shelf magazine and a handling device according to one of the claims 1 to 4 in which
- the tools required in accordance with the machining schedule of the machine tool are extracted from the respective tool accommodations of the shelf magazine by the handling device and transferred to a tool exchanger in a transfer position after the handling device has been moved - and vice versa,
**characterised in that**
- the used tools are taken out of the tool accommodations (17) accessible from the outer side and new tools are inserted into said tool accommodations (17) in at least one shelf segment (8) during the operation of the machine tool,
- the newly inserted tools are then moved into the access range of the handling device (20) by moving the shelf segment (8), and
- the handling device (20) extracts used tools from the remaining shelf (1, 7) and inserts them into empty spaces in the shelf segment (8) and extracts the new tools from the shelf segment (8) and inserts them into the empty spaces in the remaining shelf (1, 7) during the operation of the machine.

## Revendications

1. Magasin à outils avec des rayons pour fraiseuses et aléseuses avec
- au moins un rayon (1, 6) ayant plusieurs casiers (3, 12) disposés à des intervalles prédéfinis l'un au-dessus de l'autre et présentant chacun une pluralité d'évidements ouverts sur un côté (4, 13) en tant que supports individuels pour des outils suspendus,
- un dispositif de manipulation (20) placé à côté du rayon (1, 6), pouvant se déplacer horizontalement et verticalement grâce à l'action d'un moteur, avec au moins un dispositif de préhension (24) pour extraire des outils définis du rayon correspondant (1, 6) et pour remettre chaque outil à un changeur d'outil, et
- au moins un segment de rayon (8) rotatif autour de son axe vertical central (11), comportant des casiers (15) à évidements (16, 17) sur les faces avant et arrière en tant que supports d'outil, les évidements sur la face avant (16) se trouvant dans la zone de préhension du dispositif de manipulation (20) et les évidements sur la face arrière (17) étant accessibles pour l'équipement en outils,
**caractérisé en ce que**
- deux rayons (1, 6) sont prévus à un intervalle prédéfini l'un à côté de l'autre à côté de la machine-outil,
- le rayon côté extérieur (6) présente le segment de rayon (8) rotatif autour de son axe vertical central (11),
- le dispositif de manipulation (20) est disposé dans l'intervalle entre les deux rayons (1 et 6) et est configuré pour la manipulation des deux rayons (1, 6), et **en ce que**
- le rayon côté machine (1) présente une ouverture de passage (5) pour permettre le transfert des outils du dispositif de manipulation (20) au changeur d'outil - et inversement.

2. Magasin à outils à rayons selon la revendication 1,
**caractérisé en ce que**
le segment de rayon (8) rotatif autour de son axe vertical central (11) fait partie d'un rayon de paroi fixe (6).

3. Magasin à outils à rayons selon la revendication 1 ou 2,
**caractérisé en ce que**
le dispositif de manipulation (20) est pourvu d'une compensation cinématique de rotation (27) qui compense une rotation de l'outil concerné pendant un transfert.

4. Magasin à outils à rayons selon l'une des revendications précédentes,
**caractérisé en ce que**
le dispositif de préhension (24) est articulé de manière à pouvoir tourner à l'extrémité d'un bras pivotant (25) et **en ce que** le préhenseur (26) est configuré pour la saisie bilatérale d'outil.

5. Procédé pour la manipulation d'outils recourant à un magasin à outils à rayons et à un dispositif de manipulation selon l'une des revendications 1 à 4, où
- les outils nécessités en fonction du programme d'usinage de la machine-outil sont prélevés des supports d'outil correspondants du magasin d'outils par le dispositif de manipulation et transférés en position de transfert à un changeur d'outil après déplacement du dispositif de manipulation - et inversement,
**caractérisé en ce que**
- les outils usagés sont extraits de supports d'outil (17) accessibles de l'extérieur sur au moins un segment de rayon (8) pendant la marche de la machine-outil, et de nouveaux outils sont mis en place dans ces supports d'outil (17),
- les outils nouvellement mis en place sont ensuite amenés dans la zone de préhension du dispositif de manipulation (20) par déplacement du segment de rayon (8), et **en ce que**
- le dispositif de manipulation (20) prélève les outils usagés du rayon restant (1, 7) pendant la marche de la machine et les met en place dans des emplacements vides du segment de rayon (8), et prélève les nouveaux outils du segment de rayon (8) pour les mettre en place dans des emplacements vides du rayon restant (1, 7).
